# EUROPEAN PATENT SPECIFICATION

(11) **EP 0 664 152 B1**
(45) Date of publication and mention of the grant of the patent: **04.10.2001**
(21) Application number: 95610003.6
(22) Date of filing: 23.01.1995
(51) Int. Cl.: B01F 7/00

(54) **Vehicle for mixing and dispensing animal feed**
Fahrzeug zum Mischen und Abgeben von tierischen Futter
Véhicule de mélange et de distribution de fourrage pour animaux

(30) Priority: 21.01.1994 DK 9894
(43) Date of publication of application: 26.07.1995
(73) Proprietor: JF-Fabrikken J. Freudendahl A/S, 6400 Soenderborg (DK)
(72) Inventor: Nielsen, Herluf, DK-8800 Viborg (DK)
(74) Representative: Pedersen, Soeren Skovgaard

(56) References cited:
- EP-A- 0 304 604
- EP-A- 0 427 483
- FR-A- 1 277 015
- GB-A- 134 451
- GB-A- 2 076 678
- GB-A- 2 210 281
- US-A- 1 833 220
- US-A- 3 482 821
- US-A- 3 599 939
- US-A- 4 364 667
- PATENT ABSTRACTS OF JAPAN vol. 7, no. 100 (C-164)(1245) 28 April 1983 & JP-A-58 027 699 (KOUJI YAMADA)

## Description

The invention relates to a feed vehicle for mixing feed especially based on straw for cattle and dispensing said feed and of the type comprising a vehicle body, the bottom being cylindrical and in which a driven mixing rotor with paddle arms is arranged in the longitudinal direction of the vehicle body, the paddle arms at their ends being provided with paddles for mixing the feed ingredients and dispensing of the ready feed through a hinged hatch in the side.

Prior art constructions have their dispensing hatches placed at the front of the feed truck and the paddles are slanted such that they convey the feed towards the hatch. This conveying of the material also takes place during the actual mixing of the feed and causes an undesirable pressure against the front of the vehicle body. Furthermore, the mixing process is somewhat inadequate.

According to the invention the problem is solved by slanting the paddles at the rear of the mixing rotor such that they convey the material forwardly in the vehicle body whereas the paddles at the front are slanted such that they convey the material backwardly in the truck and that the dispensing hatch be placed in the area where the opposing paddles meet each other. The paddles may be successively spaced approximately 240 degrees with the exception of the two paddles at the intersection of the two sets of paddles being placed exactly opposite one another. By this arranging of the paddles the ends of the vehicle body is relieved because the material is carried from the ends towards the dispensing hatch. By placing the paddle arms 2/3 turn after each other a significantly improved mixing effect may be achieved compared with prior art constructions having the arms positioned in a somewhat random pattern. In the dispensing zone an extra intense mixing process takes place. The end pressure is further controlled by the vehicle body being designed with an gradient about a horizontal axis. If the vehicle body adjustable is inclined for- wardly the material also moves forwardly whereby the rear end is relieved and vice versa.

Furthermore the mixing rotor may be placed such that the distance to the side of the vehicle body is increased in the rotating direction of the rotor and the paddles are also placed such that their tail ends rise from the side of the vehicle body whereby material being wedged underneath the paddles is eliminated which is the tendency in the prior art constructions.

In order to tear up the straw bales, loose straw, hay or other feed ingredients inwardly extending cutters can be placed at the inner side of the vehicle body. In prior art constructions these cutters are detachably fastened in a welded-on mounting. The cutters are exposed to heavy wear and are to be replaced frequently which is rather complicated and time consuming. In the present invention the cutters may be fastened in a holder designed for an outside fastening to the vehicle body in which there are slots through which slots the cutters protrude into the inner side of the vehicle body. The counter cutters may thus be replaced working from the outside which makes it much easier and is a major simplification, similarly, the cutters can be removed if they are not required for specific purposes. The inside of the vehicle body then appears smooth and without protruding mountings for the cutters.

For controlling the quantity of feed and the mixing ratio of the ingredients as well as the dispensed feed quantity the vehicle body is provided with weighing cells. The vehicle body may be provided with three weighing cells. At the rear one cell is placed at either side. The cell is placed in a short horizontal support structure having a downwardly extending link with a link seat fastened to a holder in the chassis frame of the feed truck. At the front the vehicle body is supported by an upright top link connected to the vehicle body by a link seat via a weighing cell and where the lower end of the top link is fastened to the chassis frame of the vehicle such that it can turn about a longitudinal axis. For stabilizing the vehicle body a stabilizer may be fastened underneath said body to this body and to the chassis frame to counteract rolling of the vehicle body. This floating suspension of the vehicle body causes a very accurate function of the weighing cells thereby yielding a precise weighing result.

The invention shall be explained in further detail in the following with reference to the attached drawing, in which:-
Fig. 1 shows a side view of a vehicle for mixing and dispensing animal feed,
Fig. 2 is a schematic view of a mixing rotor showing the arranging of the paddle arms, and
Fig. 3 is a schematic cross section of the lower part of the vehicle body where the mixing rotor is shown with only two paddle arms to illustrate their successive positions,
Fig. 4 is a schematic view of the position of a paddle relative the inner side of the vehicle body,
Fig. 5 is a direct top view of the chassis frame of the vehicle for mixing and dispensing animal feed,
Fig. 6 is a schematic view of the rearmost weighing cell,
Fig. 7 illustrates a longitudinal section of the front of the vehicle body supported by a top link being supported on a weighing cell,
Fig. 8 is a schematic view of a top link supporting the front of the vehicle body and the fastening of cutters as well as a horizontal stabilizer below the truck for stabilizing of the floatingly suspended vehicle body, and
Fig. 9 is a lateral view of a the vehicle for mixing and dispensing animal feed, and
Fig. 10 is a top view of the chassis frame of the vehicle for mixing and dispensing animal feed illustrated in Fig. 9.

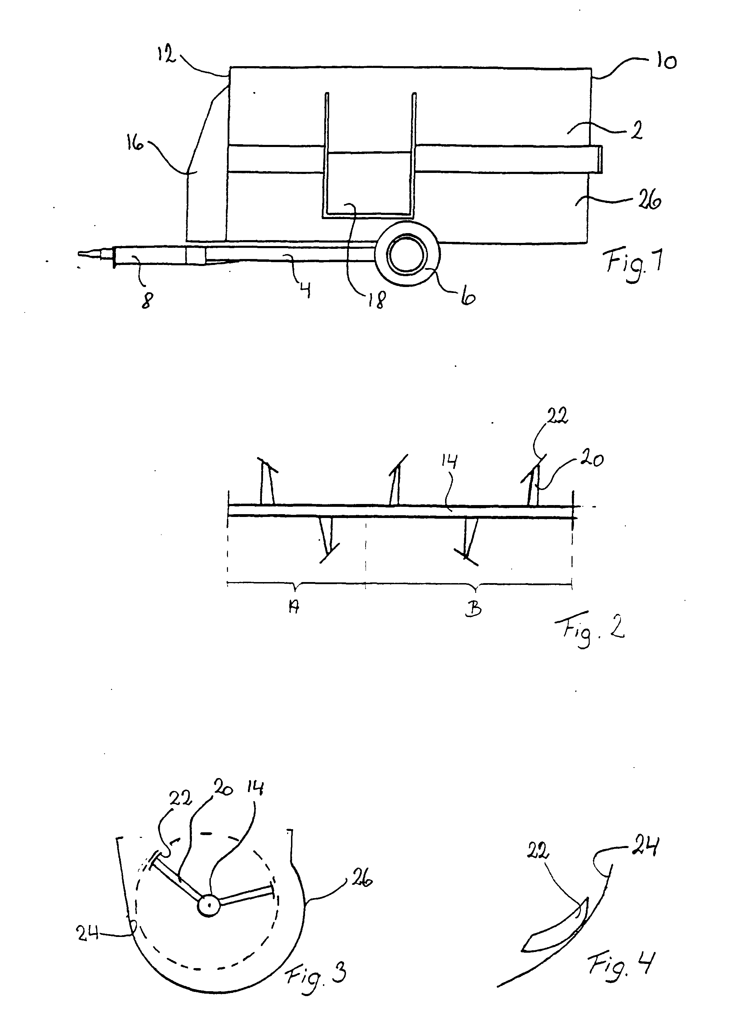

Fig. 1 of the drawing shows purely schematically a lateral view of a vehicle for mixing and dispensing animal feed comprising a vehicle body 2 mounted on a chassis provided with drive wheels 6 at the rear. By a pole 8 at the front the feed truck is designed for being drawn by a tractor. Inside the vehicle body in its longitudinal direction a mixing rotor is placed between the end walls 10, 12, said rotor being rotated by a transmission placed in an enclosure 16 at the front end of the vehicle body. In the side of the vehicle body there is a hinged hatch 18 for dispensing the ready mixed feed. In connection with this dispensing hatch an unloading roller or elevator can be arranged.

For achieving an efficient mixing of the feed ingredients and to ease the pressure against the ends of the vehicle body the mixing rotor 14 is designed as schematically illustrated in Fig. 2. The mixing rotor comprises five paddle arms 20 of a rectangular cross section tapering towards its ends where a paddle 20 is placed. The paddle arms are divided into two sections A, B meeting at the dispensing hatch 18. At the front of the vehicle body the paddles are placed so that they convey the material backwardly towards the hatch while the paddles at the rear are placed so that these convey the material forwardly likewise towards the hatch. In this manner the ends of the vehicle body is relieved of pressure and at the same time a particularly high mixing effect is achieved at the dispensing zone at the intersection of the two material flows. The first paddle arm in each section is displaced 180 degrees. The succeeding arms are displaced 240 degrees relative the preceding one whereby it is found that an extremely efficient mixing of the ingredients is achieved.

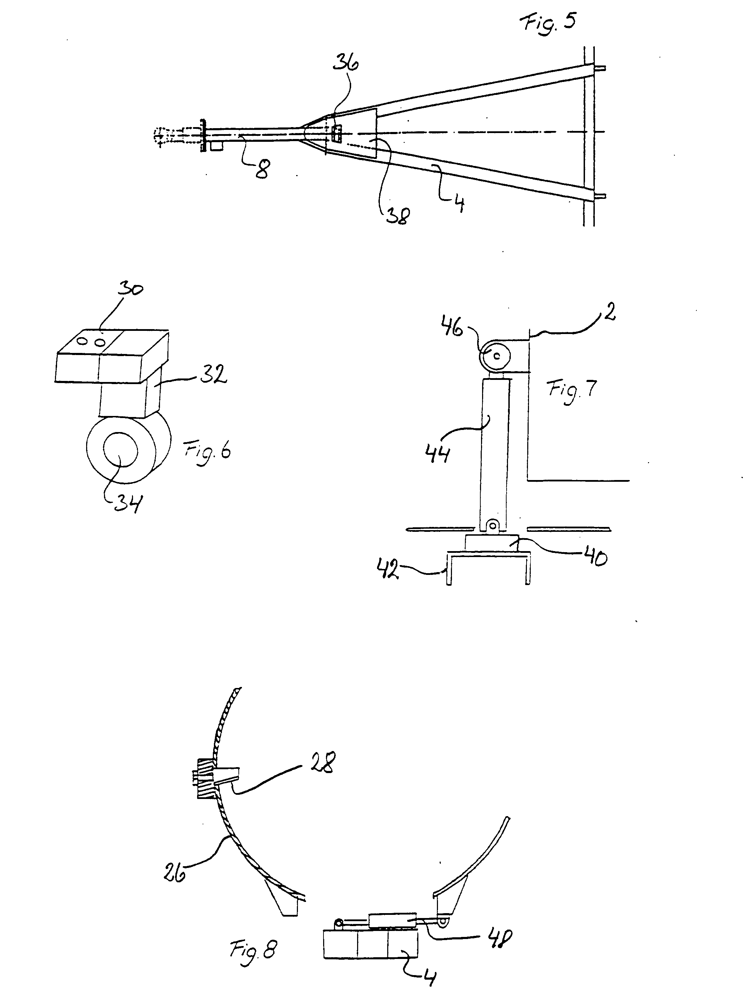

To avoid material becoming wedged below the paddles 22 against the side wall 24 the mixing rotor is seated a little eccentric relative the cylindrical portion 26 of the vehicle body such that the paddles at the entrance to the cylindrical portion 26 of the vehicle body are virtually in contact with the side wall whereas the further travel results in an increasing distance from the wall, cf. Fig. 3. Furthermore the paddles 22 are placed so that their tail ends raise away from the vehicle side 24, cf. Fig. 4. The material that would otherwise tend to wedge beneath the paddles causing the rotor in adverse cases to stick escapes due to the increasing distance to the wall and the slip of the paddles in the rearward direction.

One of the feed ingredients is typically whole straw bales that are shredded by the mixing rotor 14 and a knife arrangement 28 on the cylindrical portion 26 of the vehicle body at the entry into this. As schematically shown in Fig. 8 the knife-shaped cutters are mounted at the outside of the vehicle body and extend into the interior through slots in the side especially designed for this purpose. The knives are mounted in a base fastened to the outside of the vehicle body allowing the knives to be externally replaced, these knives being extremely prone to heavy wear and consequently in need of frequent replacements.

For weighing the ingredients the whole quantity of feed and the dispensed quantity of feed, the vehicle body rests on weighing cells. The electric equipment including digital display as well as hydraulic control valves are aggregated in a control unit placed at the end of a pivotal telescopic arm, which is not shown, at the front of the feed truck. At the rear the vehicle body is supported at a weighing cell 30 at either side. As schematically shown in Fig. 6 the weighing cell is mounted at a support structure 32 provided with a link seat 34 above which the weighing cell is fastened to a holder on the chassis, cf. Fig. 5. At the front through a hole 36 in a sheet 38 at the chassis 4 a weighing cell 40 is placed on a cross piece 42 in the former. Above the weighing cell there is a top link 44 which is fastened so that it can pivot about a transverse axis while the upper end of the top link is provided with a link seat 46 with which the link is fastened to and supports the vehicle body. The vehicle body is thus floatingly suspended on the weighing cells resulting in obtaining a precise weighing result, as inaccuracies from torsions in the chassis are eliminated.

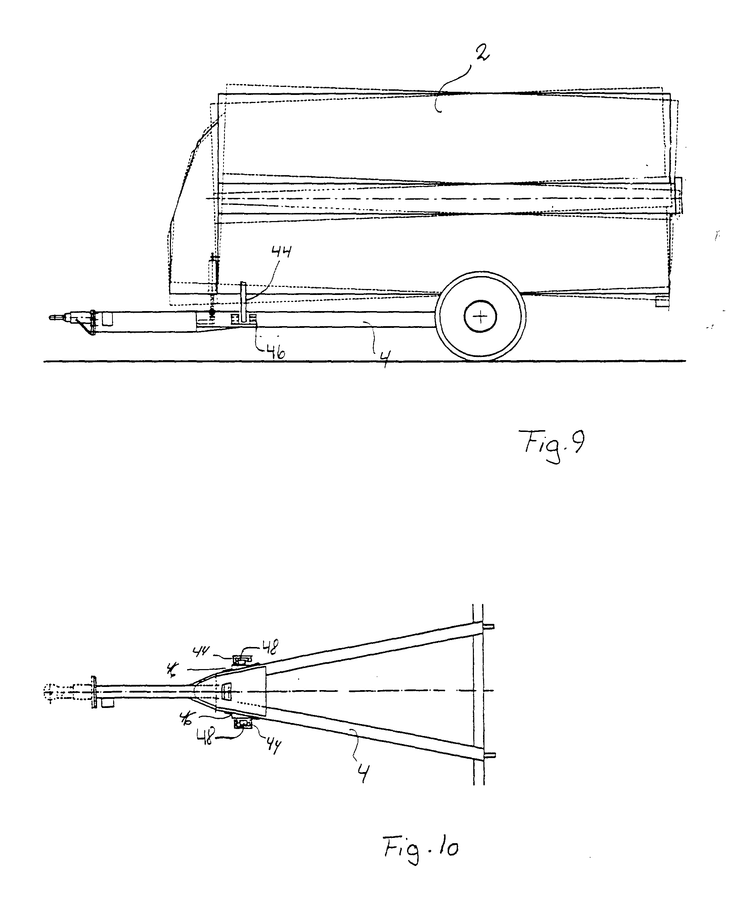

In Fig. 9 of the drawing is shown an essential part of the feed truck where the vehicle body is arranged such that it can be tilted about an axis through the link seat 34 in the support structure for the rearmost weighing cells. At the front the vehicle body 2 is guided by a leg 44 at either side, these legs resting on the outside of the chassis frame. At the outside of the frame a wedge 46 having its bolts in elongate holes, the wedge being capable of being displaced forwardly and backwardly. At the outer ends of the legs a nylon roll 48 is arranged sliding at the wedges. Possible inaccuracies and wobbling in the guiding means are removed by adjusting the wedges. For tilting of the whole body the top link is here a hydraulic cylinder. The vehicle body can be caused to tilt forwardly as well as backwardly whereby the pressure on the ends of the vehicle body may be controlled. When the vehicle body tilts forwardly the material seeks forwardly whereby the rear end be pressure relieved and vice versa when the vehicle body be caused to tilt backwardly. A very slight tilting suffices, a difference in the magnitude of 10 cm from the horizontal by the front of the vehicle body suffices.

The invention thus provides a significantly improved construction of a vehicle for mixing and dispensing animal feed having better mixing abilities and easier maintenance.

## Claims

1. A vehicle for mixing and dispensing animal feed, for use in mixing feed, especially based on straw materials such as straw, hay and grass for cattle, and dispensing said feed, and of the type comprising a chassis (4) and a vehicle body (2), the bottom portion (26) thereof being cylindrical, in which a single driven mixing rotor (14) with paddle arms (20) is arranged in a longitudinal direction of the vehicle body, the paddle arms at their ends being provided with paddles (22) for mixing the feed ingredients and dispensing of the ready feed through a hinged hatch (18) in the side of the vehicle body, ***characterised in that***
the mixing rotor comprises a rearmost portion (B) and a front portion (A), the paddles (22) at the rearmost portion (B) of the mixing rotor being slanted such that they convey the material forwardly in the vehicle body, while the paddles on the front portion (A) are slanted such that they convey the material rearwardly in the vehicle and that the dispensing hatch (18) is positioned where the paddle sections (A, B) acting in opposite directions meet one another, and
wherein the vehicle body (2) can be caused to tilt forwardly as well as backwardly relative to the chassis, whereby the pressure of animal feed contained in the vehicle body on the ends thereof can be additionally controlled.

2. A vehicle for mixing and dispensing animal feed according to claim 1, wherein the paddles (20) are successively placed at a 240 degrees interval except from the two paddles at the intersection of the two sets of paddles, these two paddles being displaced at 180 degrees to one another.

3. A vehicle for mixing and dispensing animal feed according to claims 1 or 2, wherein the mixing rotor (14) is placed eccentrically in the cylindrical portion (26) of the vehicle body such that the distance increases successively from the paddles (22) to the side of the vehicle body in the rotating direction of the rotor.

4. A vehicle for mixing and dispensing animal feed according to claim 3, wherein the paddles (22) are placed such that the rear end rises from the side of the vehicle (24).

5. A vehicle for mixing and dispensing animal feed according to claim 1 provided with cutters (28) on the inside of the vehicle body for cutting feed ingredients such as straw bales wherein the cutters (28) are fastened in holders for an outside fastening to the vehicle body (2), in which slots are present through which the counter cutters extend into the interior of the vehicle body.

6. A vehicle for mixing and dispensing animal feed according to claim 1 where the vehicle body rests on weighing cells (30, 40) for weighing of the feed ingredients and the feed mixture wherein at the rear a weighing cell (30) is placed at either side sitting on a short horizontal support structure (32) having a downwardly extending link provided with a link seat (34) fastened to a holder on the chassis frame of the vehicle body and where the vehicle body (2) at its front is supported by an upright top link connected to the vehicle body by a link seat (46) and where the lower end of the link via a shaft is standing on a weighing cell (40) fastened to the chassis frame (4) of the vehicle.

7. A vehicle for mixing and dispensing animal feed according to claim 6,wherein for stabilising the vehicle body (2) a horizontal stabiliser (48) is placed underneath this, fastened to the vehicle body (2) and to the chassis frame (4) for counteracting rolling of the vehicle body.

## Patentansprüche

1. Fahrzeug zum Mischen und Abgeben von Tierfutter zur Verwendung zum Mischen von Futter, insbesondere auf der Basis von Strohmaterialien, wie z.B. Stroh, Heu und Gras für Rinder, und zum Abgeben des Futters, der Bauart, die ein Fahrgestell (4) und einen Fahrzeugaufbau (2) aufweist, dessen Bodenabschnitt (26) zylindrisch ist und in dem ein einzelner angetriebener Mischrotor (14) mit Paddelarmen (20) in Längsrichtung des Fahrzeugaufbaus angeordnet ist, welche Paddelarme an ihren Enden mit Paddeln (22) zum Mischen der Futterinhaltsstoffe und Abgeben des fertigen Futters durch eine gelenkig gehalterte Klappe (18) in der Seite des Fahrzeugaufbaus versehen sind, **dadurch gekennzeichnet, daß**
der Mischrotor einen hintersten Abschnitt (B) und einen vorderen Abschnitt (A) enthält, wobei die Paddel (22) an dem hintersten Abschnitt (B) des Mischrotors in der Weise geneigt sind, **daß** sie das Material in dem Fahrzeugaufbau nach vorne fördern, während die Paddel an dem vorderen Abschnitt (A) in der Weise geneigt sind, **daß** sie das Material in dem Fahrzeug nach hinten fördern, und **daß** die Ausgabeklappe (18) dort positioniert ist, wo die in entgegengesetzten Richtungen wirkenden Paddelabschnitte (A, B) aufeinandertreffen, und
wobei das Kippen des Fahrzeugaufbaus sowohl nach vorne als auch nach hinten relativ zu dem Fahrgestell veranlaßt werden kann, wodurch der Druck des in dem Fahrzeugaufbau enthaltenen Tierfutters auf dessen Enden zusätzlich gesteuert werden kann.

2. Fahrzeug zum Mischen und Abgeben von Tierfutter nach Anspruch 1, bei welchem die Paddel (20) aufeinanderfolgend in Abständen von 240 Grad angeordnet sind, mit Ausnahme der beiden Paddel an dem Schnittpunkt der beiden Paddelsätze, welche beiden Paddel um 180 Grad zueinander versetzt sind.

3. Fahrzeug zum Mischen und Abgeben von Tierfutter nach Anspruch 1 oder 2, bei welchem der Mischrotor (14) in dem zylindrischen Abschnitt (26) des Fahrzeugaufbaus in der Weise exzentrisch angeordnet ist, daß der Abstand von den Paddeln (22) zu der Seite des Fahrzeugaufbaus in Drehrichtung des Rotors sukzessive zunimmt.

4. Fahrzeug zum Mischen und Abgeben von Tierfutter nach Anspruch 3, bei welchem die Paddel in der Weise angeordnet sind, daß das hintere Ende von der Seite (24) ansteigt.

5. Fahrzeug zum Mischen und Abgeben von Tierfutter nach Anspruch 1, versehen mit Schneidmessern (28) an der Innenseite des Fahrzeugaufbaus zum Schneiden von Futterinhaltsstoffen, wie z.B. Strohballen, bei welchem die Schneidmesser (28) in Haltern zur Befestigung von außen am Fahrzeugaufbau (2) befestigt sind, in welchem Schlitze vorhanden sind, durch die die Gegenschneidmesser in das Innere des Fahrzeugaufbaus verlaufen.

6. Fahrzeug zum Mischen und Abgeben von Tierfutter nach Anspruch 1, bei dem der Fahrzeugaufbau auf Wägezellen (30, 40) zum Wiegen der Futterinhaltsstoffe und der Futtermischung ruht, wobei am hinteren Teil eine Wägezelle (30) auf beiden Seiten auf einer kurzen horizontalen Halterung (32) sitzend plaziert ist, die ein nach unten verlaufendes Verbindungselement hat, das mit einem Verbindungssitz (34) versehen ist. der an einem Halter an dem Fahrgestellrahmen des Fahrzeugaufbaus befestigt ist. wobei der Fahrzeugaufbau (2) an seiner Vorderseite durch ein aufrechtes oberes Verbindungselement getragen wird, das mit dem Fahrzeugaufbau durch einen Verbindungssitz (46) verbunden ist, und wobei das untere Ende des Verbindungselements über eine Achse auf einer Wägezelle (40) steht, die an dem Fahrgestellrahmen (4) des Fahrzeugs befestigt ist.

7. Fahrzeug zum Mischen und Abgeben von Tierfutter nach Anspruch 6, bei welchem zur Stabilisierung des Fahrzeugaufbaus (2) ein horizontaler Stabilisator (48) unter diesem angeordnet ist, der mit dem Fahrzeugaufbau (2) und dem Fahrgestellrahmen (4) verbunden ist, um einem Rollen des Fahrzeugaufbaus entgegenzuwirken.

## Revendications

1. Véhicule pour mélanger et distribuer de la nourriture pour animaux, pour une utilisation dans le mélange de la nourriture, spécialement basée sur des matières à base de paille, telles que de la paille, du foin et de l'herbe pour du bétail, et la distribution de ladite nourriture, et du type comprenant un châssis (4) et un corps de véhicule (2), la portion de fond (26) de celui-ci étant cylindrique, dans lequel un rotor de mélange entraîné, unique (14) ayant des bras (20) à palettes est agencé dans une direction longitudinale du corps du véhicule, les bras à palettes, à leurs extrémités, étant munis de palettes (22) pour mélanger les ingrédients de nourriture et distribuer la nourriture prête à travers une trappe articulée (18) dans le côté du corps du véhicule, **caractérisé en ce que**
le rotor de mélange comprend une portion arrière (B) et une portion frontale (A), les palettes (22) au niveau de la portion arrière (B) du rotor de mélange étant inclinées de telle sorte qu'elles transfèrent la matière vers l'avant dans le corps du véhicule, tandis que les palettes sur la portion frontale (A) sont inclinées de telle sorte qu'elles transfèrent la matière vers l'arrière dans le véhicule, et **en ce que** la trappe de distribution (18) est positionnée où les sections des palettes (A, B) agissant en sens opposés se rencontrent l'une l'autre, et
dans lequel le corps du véhicule (2) peut être entraîné à basculer vers l'avant ainsi que vers l'arrière par rapport au châssis, grâce à quoi la pression de la nourriture animale contenue dans le corps du véhicule sur les extrémités de celui-ci peut être commandée de façon additionnelle.

2. Véhicule pour mélanger et distribuer de la nourriture pour animaux selon la revendication 1, dans lequel les palettes (20) sont successivement placées à un intervalle de 240° excepté à partir des deux palettes à l'intersection des deux séries de palettes, ces deux palettes étant décalées à 180° l'une de l'autre.

3. Véhicule pour mélanger et distribuer de la nourriture pour animaux selon la revendication 1 ou 2, dans lequel le rotor de mélange (14) est placé de façon excentrique dans la portion cylindrique (26) du corps du véhicule, de telle sorte que la distance augmente successivement depuis les palettes (22) vers le côté du corps du véhicule dans le sens de rotation du rotor.

4. Véhicule pour mélanger et distribuer de la nourriture pour animaux selon la revendication 3, dans lequel les palettes (22) sont placées de telle sorte que l'extrémité arrière s'élève à partir du côté du véhicule (24).

5. Véhicule pour mélanger et distribuer de la nourriture pour animaux selon la revendication 1, muni de couteaux (28) sur l'intérieur du corps du véhicule pour couper les ingrédients de nourriture tels que des balles de paille, dans lequel les couteaux (28) sont fixés dans des supports pour une fixation extérieure au corps du véhicule (2) où des fentes sont présentes à travers lesquelles les contre-couteaux s'étendent à l'intérieur du corps du véhicule.

6. Véhicule pour mélanger et distribuer de la nourriture pour animaux selon la revendication 1, où le corps du véhicule repose sur des cellules de pesage (30, 40) pour peser les ingrédients de nourriture et le mélange de nourriture, dans lequel, à l'arrière, une cellule de pesage (30) est placée de chaque côté reposant sur une courte structure de support horizontale (32), ayant une liaison s'étendant vers le bas avec un siège de liaison (34) fixé à un support sur le châssis du corps du véhicule, et où le corps du véhicule (2), au niveau de son avant, est supporté par une liaison supérieure verticale reliée au corps du véhicule par un siège de liaison (46), et où l'extrémité inférieure de la liaison, via un arbre, se trouve sur une cellule de pesage (40) fixée au châssis (4) du véhicule.

7. Véhicule pour mélanger et distribuer de la nourriture pour animaux selon la revendication 6, dans lequel, pour stabiliser le corps du véhicule (2), un stabilisateur horizontal (48) est placé en dessous de celui-ci, fixé au corps du véhicule (2) et au châssis (4) pour contrecarrer le roulis du corps du véhicule.
